# EUROPEAN PATENT SPECIFICATION

(11) **EP 3 135 502 B1**
(45) Date of publication and mention of the grant of the patent: **12.09.2018**
(21) Application number: 15782928.4
(22) Date of filing: 15.04.2015
(51) Int. Cl.: B60C 9/20, B60C 9/28

(54) **PNEUMATIC TYRE**
LUFTREIFEN
PNEUMATIQUE

(30) Priority: 25.04.2014 JP 2014091695
(43) Date of publication of application: 01.03.2017
(73) Proprietor: Bridgestone Corporation, Tokyo 104-8340 (JP)
(72) Inventor: MORI, Yosuke, Tokyo 104-8340 (JP)
(74) Representative: Oxley, Robin John George
(86) International application number: PCT/JP2015/061597
(87) International publication number: WO 2015/163214

(56) References cited:
- DE-T5-112013 002 477
- JP-A- 2008 132 818
- JP-A- 2010 120 613
- JP-A- 2012 071 665
- US-B1- 6 668 889

## Description

### Technical Field

The present invention relates to a pneumatic tire that suppresses uneven wear.

### Background Art

A pneumatic tire described in Japanese Patent Application Laid-Open (JP-A) No. 2011-162023, for example, is known as a pneumatic tire employed in trucks, buses, and the like. US 6,668,889 B1 discloses a pneumatic tire having a reinforcement package including a mid-ply belt having reinforcement at a 0 degree angle with respect to the equatorial plane, comprising reinforcing cords or filaments which are discontinuous.

### SUMMARY OF INVENTION

### Technical Problem

Measures are being taken in such pneumatic tires to suppress uneven wear from occurring at shoulder sides of a tread portion; however, decreasing the aspect ratio tends to worsen uneven wear, such that there is a demand for technology that further suppresses uneven wear.

An object of an exemplary embodiment of the present invention is to provide a pneumatic tire capable of suppressing a worsening of uneven wear at shoulder sides of a tread portion accompanying a decrease in the aspect ratio.

### Solution to Problem

A pneumatic tire according to a first aspect includes a carcass that spans from one bead portion to another bead portion, a tread portion that is disposed at a tire radial direction outer side of the carcass and that contacts a road surface, and a belt. The belt includes: a first inclined belt ply that is disposed at the tire radial direction outer side of the carcass and that includes plural cords set at an angle of from 45° to 60° with respect to a tire circumferential direction; a circumferential direction belt ply that is disposed at the tire radial direction outer side of the first inclined belt ply, that includes a cord wound in a spiral shape and set at an angle of 5° or less with respect to the tire circumferential direction, and that is formed with a narrower width than the first inclined belt ply; a second inclined belt ply that is disposed at the tire radial direction outer side of the circumferential direction belt ply, that is inclined in an opposite direction to an inclination of the cords of the first inclined belt ply with respect to the tire circumferential direction, that includes plural cords set at an angle of from 30° to 60° with respect to the tire circumferential direction, and that is set with a width wider than that of the circumferential direction belt ply; and a third inclined belt ply that is disposed at the tire radial direction outer side of the second inclined belt ply, that includes plural cords set at an angle that exceeds 5° and is 30° or less with respect to the tire circumferential direction, that is set with a width wider than those of the first inclined belt ply and the second inclined belt ply, and that is provided across 80% or more of a ground contact width of the tread portion, the width of the third inclined belt ply being set within a range of from 105% to 130% of the width of the second inclined belt ply.

In the pneumatic tire according to the first aspect, the circumferential direction belt ply is configured including the cord that is inclined at 5° or less with respect to the tire circumferential direction, thereby enabling rigidity of the belt with respect to out-of-plane bending in the tire circumferential direction to be raised, and out-of-plane bending deformation of the tread portion to be suppressed. Thus, an increase in compression distortion in the circumferential direction of a tire radial direction outer side portion of the belt can be suppressed, and elongation of the tire radial direction outer side portion of the belt at a kick-off side of the tread portion is also suppressed. This enables drag of the tread portion against the road surface to be suppressed, and suppresses a worsening of uneven wear at shoulder sides of the tread portion accompanying a decrease in aspect ratio.

When load in a direction intersecting the surface of the belt acts on the belt, the deformed belt is no longer in its original plane. In the first aspect, this deformation is referred to as out-of-plane bending deformation, and rigidity with respect to the out-of-plane bending deformation is referred to as rigidity with respect to out-of-plane bending.

The second inclined belt ply, which is inclined in the opposite direction to the inclination of the cords of the first inclined belt ply with respect to the tire circumferential direction, includes the cords set to an angle within a range of from 30° to 60° with respect to the tire circumferential direction, and is set with a width wider than that of the circumferential direction belt ply, is disposed at the tire radial direction outer side of the circumferential direction belt ply. The third inclined belt ply, which includes cords set at an angle that exceeds 5° and is 30° or less with respect to the tire circumferential direction and is set with a width wider than that of the second inclined belt ply, is disposed at the tire radial direction outer side of the second inclined belt ply. The first inclined belt ply and the second inclined belt ply form an intercrossing belt layer, thereby improving the rigidity with respect to in-plane shearing of the belt.

This enables a difference in diameter between a tire equatorial plane side and the shoulder sides to be reduced and enables uneven wear performance to be improved. This improvement in rigidity with respect to in-plane shearing of the belt enables cornering power to be improved, thereby enabling steering stability to be improved.

The second inclined belt ply is disposed at the radial direction outer side of the circumferential direction belt ply, and the cords of the second inclined belt ply are at angle of from 30° to 60° with respect to the tire circumferential direction. This enables the rigidity of the belt with respect to out-of-plane bending in the tire circumferential direction to be raised and out-of-plane bending deformation of the belt in the tire circumferential direction to be suppressed, compared to cases in which the second inclined belt ply is not provided. This enables an advantageous effect, in which an increase in circumferential direction compression distortion of the belt is suppressed and uneven wear at the shoulder sides of the tread portion is suppressed, to be increased.

The third inclined belt ply, which includes the plural cords that are set at an angle that exceeds 5° and is 30° or less with respect to the tire circumferential direction and that are inclined in the opposite direction to the inclination of the second inclined belt ply with respect to the tire circumferential direction, is disposed at the tire radial direction outer side of the second inclined belt ply. Thus, the second inclined belt ply and the third inclined belt ply form an intercrossing belt layer, enabling rigidity of the belt with respect to in-plane shearing and rigidity of the belt with respect to out-of-plane bending in the tire circumferential direction to be improved.

The cords of the third inclined belt ply are set at an angle that exceeds 5° and is 30° or less with respect to the tire circumferential direction, thereby enabling rigidity with respect to out-of-plane bending in the tire circumferential direction to be the highest after that of the circumferential direction belt ply. By setting the width of the third inclined belt ply to 80% or more of the ground contact width of the tread portion, width direction ends of the third inclined belt ply are closer to ground contact edges of the tread portion, enabling an advantageous effect, in which rigidity with respect to out-of-plane bending in the tire circumferential direction is raised by the third inclined belt ply, to be extended as far as the vicinity of the ground contact edges.

Note that, since the cords of the second inclined belt ply are set at an angle of 30° or greater with respect to the tire circumferential direction, the second inclined belt ply has lower rigidity with respect to out-of-plane bending in the tire circumferential direction than the circumferential direction belt ply. Moreover, since the cords of the third inclined belt ply are set at an angle that exceeds 5° and is 30° or less with respect to the tire circumferential direction, the third inclined belt ply also has lower rigidity with respect to out-of-plane bending in the tire circumferential direction than the circumferential direction belt ply.

The reason that the width of the second inclined belt ply and the width of the third inclined belt ply, with rigidity set in this manner, are set wider than the width of the circumferential direction belt ply, is because when the width of the second inclined belt ply and the width of the third inclined belt ply, which are disposed at the tire radial direction outer side of the circumferential direction belt ply, are not set wider than the width of the circumferential direction belt ply, a step in rigidity with respect to out-of-plane bending in the tire circumferential direction increases at the tire width direction outer sides of the circumferential direction belt ply, and uneven wear performance falls at the tire width direction outer sides of the circumferential direction belt ply, namely, at the shoulder sides of the tread portion.

Thus, the width of the second inclined belt ply and the width of the third inclined belt ply, which are set with a lower rigidity with respect to out-of-plane bending in the tire circumferential direction than the circumferential direction belt ply, are set with wider than the width of the circumferential direction belt ply, and the second inclined belt ply and third inclined belt ply are extended further toward the tire width direction outer sides than both width direction end portions of the circumferential direction belt ply, thereby enabling the rigidity to be gradually changed from tire width direction outer ends of the circumferential direction belt ply toward the ground contact edges of the tread portion.

The cord of the circumferential direction belt ply extends around the circumferential direction, thereby increasing a hoop effect, and enabling an increase in diameter when the internal pressure has been fully inflated and when rolling under load, to be suppressed. A large tensile force acts on the cord of the circumferential direction belt ply, such that damage to the cord due to input from the road surface, or from foreign matter piercing through the tread portion, is preferably suppressed. In the pneumatic tire according to the first aspect, the second inclined belt ply and the third inclined belt ply are disposed at the tire radial direction outer side of the circumferential direction belt ply, thereby enabling damage to the circumferential direction belt ply to be suppressed by the second inclined belt ply and the third inclined belt ply.

In the pneumatic tire according to the first aspect, the first inclined belt ply, which is configured including the plural cords set at an angle of from 45° to 60° with respect to the tire circumferential direction, is disposed as a first layer of the belt that is nearest to the carcass, thereby enabling plunger durability of the pneumatic tire to be secured. Note that setting the first inclined belt ply with a width wider than that of the circumferential direction belt ply enables a region in which plunger durability is secured to be extended in the tread width direction.

When the angle of the cords of the first inclined belt ply with respect to the tire circumferential direction is less than 45°, the rigidity of the first inclined belt ply in the tire circumferential direction is raised, the ability to envelop protruding objects is reduced, and there is a concern that plunger durability cannot be secured.

However, when the angle of the cords of the first inclined belt ply with respect to the tire circumferential direction exceeds 60°, the rigidity with respect to in-plane shearing falls, leading to a negative effect on uneven wear performance of the tread end portions, and a reduction in steering stability.

When the angle of the circumferential direction belt ply exceeds 5° with respect to the tire circumferential direction, the rigidity of the belt with respect to out-of-plane bending in the tire circumferential direction cannot be improved.

When the angle of the cords of the second inclined belt ply is less than 30° with respect to the tire circumferential direction, the rigidity with respect to in-plane shearing is lowered, leading to a negative effect on uneven wear performance of the tread end portions and a reduction in steering stability.

However, when the angle of the cords of the second inclined belt ply with respect to the tire circumferential direction exceeds 60°, the rigidity with respect to in-plane shearing falls, leading to a negative effect on uneven wear performance of the tread end portions and a reduction in steering stability.

When the angle of the cords of the third inclined belt ply is 5° or less with respect to the tire circumferential direction, there is insufficient rigidity of the third inclined belt ply with respect to out-of-plane bending in the tire circumferential direction, and it is difficult to gradually change the rigidity from the tire width direction outer ends of the circumferential direction belt ply toward the ground contact edges of the tread portion.

However, when the angle of the cords of the third inclined belt ply exceeds 30° with respect to the tire circumferential direction, there is insufficient rigidity of the third inclined belt ply with respect to out-of-plane bending in the tire circumferential direction, and the advantageous effect, in which rigidity with respect to out-of-plane bending in the tire circumferential direction is raised by the third inclined belt ply, cannot be extended as far as the vicinity of the ground contact edges of the tread portion.

In a pneumatic tire according to the first aspect, the cords of the first inclined belt ply and the cords of the second inclined belt ply are inclined in opposite directions to each other with respect to the tire circumferential direction.

In the pneumatic tire according to the first aspect, the cords of the first inclined belt ply and the cords of the second inclined belt ply are inclined in opposite directions to each other with respect to the tire circumferential direction. Thus, the first inclined belt ply and the second inclined belt ply form an intercrossing belt layer, enabling rigidity of the belt with respect to in-plane shearing and rigidity of the belt with respect to out-of-plane bending in the tire circumferential direction to be further improved.

A pneumatic tire according to a second aspect is the pneumatic tire according to the first aspect, wherein the cord of the circumferential direction belt ply is an extendable cord that has elongation properties of from 4.5% to 5.5% elongation at break.

In the pneumatic tire according to the second aspect, since the cord of the circumferential direction belt ply is an extendable cord that has elongation properties of from 4.5% to 5.5% elongation at break, the cord is less liable to break, enabling durability of the circumferential direction belt ply to be improved.

A pneumatic tire according to a third aspect is the pneumatic tire according to the first aspect or the second aspect, wherein an aspect ratio is 65% or lower.

In the pneumatic tire according to the third aspect, the aspect ratio is 65% or lower, thereby enabling the tire cross-section height to be made even lower.

### Advantageous Effects of Invention

As explained above, the pneumatic tire according to the first aspect has an excellent advantageous effect of enabling suppression of a worsening of uneven wear at the shoulder sides of the tread portion accompanying a decrease in the aspect ratio.

The pneumatic tire according to the first aspect enables a difference in diameter between the center side and the shoulder sides of the tread portion to be reduced and uneven wear at the shoulder sides of the tread portion to be further suppressed, and also enables steering stability to be improved.

The pneumatic tire according to the second aspect enables the durability of the circumferential direction belt ply to be improved.

The pneumatic tire according to the third aspect raises the advantageous effect of suppressing a worsening of uneven wear at the shoulder sides of the tread portion accompanying a decrease in the aspect ratio.

### BRIEF DESCRIPTION OF DRAWINGS

Fig. 1 is a cross-section taken along a rotation axis, illustrating a pneumatic tire according to an exemplary embodiment.
Fig. 2 is a graph illustrating a relationship between an aspect ratio and shear distortion.

### DESCRIPTION OF EMBODIMENTS

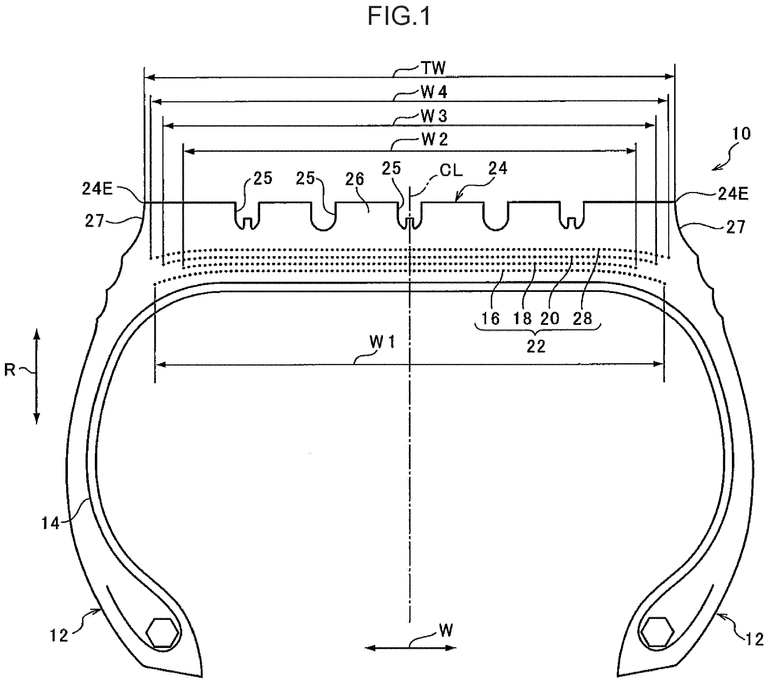

Explanation follows regarding a pneumatic tire 10 according to an exemplary embodiment of the present invention, with reference to Fig. 1. Note that in Fig. 1, the arrow W indicates a tire width direction, and the arrow R indicates a tire radial direction. As an example, the pneumatic tire 10 of the present exemplary embodiment is a truck or bus tire that has a tire size of 355/50R22.5 and is fitted to a rim with a rim diameter of 11.75 inches, and that is employed with an internal pressure of 900 kPa; however, application may be made to other sizes and other types of tires.

As illustrated in Fig. 1, the pneumatic tire 10 of the present exemplary embodiment includes a carcass 14 formed of one or more radial carcass plies that span between one bead portion 12 and another bead portion 12. In the carcass ply of the present exemplary embodiment, cord extends along a radial direction in a tire side view, and extends along a direction at right angles to a tire circumferential direction in a tread plan view.

A first inclined belt ply 16, a circumferential direction belt ply 18, a second inclined belt ply 20, and a third inclined belt ply 28 are disposed, in this sequence from the tire radial direction inside, at the tire radial direction outer side of the carcass 14. A belt 22 is configured by the first inclined belt ply 16, the circumferential direction belt ply 18, the second inclined belt ply 20, and the third inclined belt ply 28. A tread rubber layer 26, configuring a tread portion 24 that contacts a road surface, is disposed at the tire radial direction outer side of the belt 22. Note that water drainage grooves 25 are formed in the tread portion 24.

### First Inclined Belt Ply

The first inclined belt ply 16 is formed of plural cords that are arrayed parallel to each other and covered in rubber. The cords of the first inclined belt ply 16 are inclined at an angle of 45° or greater with respect to the tire circumferential direction in order to secure plunger performance. Note that an upper limit of the angle of the cords of the first inclined belt ply 16 is preferably 60° with respect to the tire circumferential direction. Steel cords, organic fiber cords, or the like may be employed as the cords of the first inclined belt ply 16. As examples, nylon cords or aromatic polyamide cords may be applied as organic fiber cords.

A width W1 of the first inclined belt ply 16 is preferably set within a range of from 70% to 90% of a ground contact width TW of the tread portion 24.

Note that the ground contact width TW is the width of a portion of the tread portion that contacts the road surface (a distance from one ground contact edge to another ground contact edge of the tread portion) when the pneumatic tire 10 is fitted to a standard rim, as defined in the JATMA YEAR BOOK (Japan Automobile Tire Manufacturers Association standards), inflated to an internal pressure of 100% air pressure (maximum air pressure) corresponding to the maximum load capacity (load shown in bold in the internal pressure-load capacity correspondence table) for the applicable JATMA YEAR BOOK size/ply rating, disposed such that a rotation axis is parallel to a horizontal flat plate in a stationary state, and applied with a mass corresponding to the maximum load capacity. In cases in which TRA standards or ETRTO standards apply in the location of use or manufacturing location, then the respective standards are adhered to.

### Circumferential Direction Belt Ply

The circumferential direction belt ply 18 is configured by winding one or plural rubber-covered cords in a spiral shape. An angle of the cord of the circumferential direction belt ply 18 with respect to the tire circumferential direction is set smaller than the angle of the cords of the first inclined belt ply 16 with respect to the tire circumferential direction, in order to obtain a hoop effect, and in order to suppress out-of-plane deformation of the belt 22 in the tire circumferential direction. Thus, the angle of the cords of the circumferential direction belt ply 18 is set at 5° or less with respect to the tire circumferential direction.

A width W2 of the circumferential direction belt ply 18 is set with a narrower width than the width W1 of the first inclined belt ply 16. The width W2 of the circumferential direction belt ply 18 is preferably set within a range of from 50% to 85% of the ground contact width TW. The width W2 of the circumferential direction belt ply 18 is also preferably set within a range of from 60% to 95% of the width W1 of the first inclined belt ply 16. (W1-W2)/2, namely, an actual dimension measured along a belt width direction from a tire width direction end of the first inclined belt ply 16 to a tire width direction end of the circumferential direction belt ply 18, is preferably 10 mm or greater.

An extendable cord (also referred to as a high elongation cord) is employed in the cord of the circumferential direction belt ply 18 in order to secure durability of the circumferential direction belt ply 18. Note that extendable cord referred to herein refers to cord that has a large total elongation at break, such as cord with elongation at break within a range of from 4.5% to 5.5%. The "elongation at break" refers to a value computed using a result measured by performing a tension test specified in JIS Z 2241. Steel cord, organic fiber cord, or the like may be employed as the cord of the circumferential direction belt ply 18. When compared per unit width, the circumferential direction belt ply 18 has higher rigidity with respect to out-of-plane bending in the tire circumferential direction than the first inclined belt ply 16.

### Second Inclined Belt Ply

The second inclined belt ply 20 is formed of plural cords that are arrayed parallel to each other and covered in rubber. The cords of the second inclined belt ply 20 are inclined at an angle of from 30° to 60° with respect to the tire circumferential direction. The cords of the second inclined belt ply 20 are inclined in an opposite direction to an inclination of the cords of the first inclined belt ply 16 with respect to the tire circumferential direction. An intercrossing belt layer is formed by inclining the cords of the second inclined belt ply 20 and the cords of the first inclined belt ply 16 in opposite directions to each other with respect to the tire circumferential direction, enabling the rigidity of the belt 22 to be raised.

Steel cords, organic fiber cords, or the like may be employed as the cords of the second inclined belt ply 20. A width W3 of the second inclined belt ply 20 is set with a width wider than the width W2 of the circumferential direction belt ply 18. The second inclined belt ply 20 covers the entire circumferential direction belt ply 18. The width W3 of the second inclined belt ply 20 is preferably set within a range of from 105% to 140% of the width W2 of the circumferential direction belt ply 18. (W3-W2)/2, namely, an actual dimension measured along the belt width direction from a tire width direction end of the circumferential direction belt ply 18 to a tire width direction end of the second inclined belt ply 20, is preferably 10 mm or greater.

The width W3 of the second inclined belt ply 20 is preferably set within a range of from 70% to 95% of the ground contact width TW of the tread portion 24.

When compared per unit width, the second inclined belt ply 20 has lower rigidity with respect to out-of-plane bending in the tire circumferential direction than the circumferential direction belt ply 18. Note that a relationship between the width W3 of the second inclined belt ply 20 and the width W1 of the first inclined belt ply 16 may be W3 > W1, W3 = W1, or W3 < W1; however, W3 ≥ W1 is preferable.

### Third Inclined Belt Ply

The third inclined belt ply 28 is formed of plural cords that are arrayed parallel to each other and covered in rubber. The cords of the third inclined belt ply 28 are inclined at an angle that exceeds 5° and is 30° or less with respect to the tire circumferential direction. Thus, the third inclined belt ply 28 has the highest rigidity with respect to out-of-plane bending in the circumferential direction and the highest burden of tensile force in the circumferential direction after those of the circumferential direction belt ply 18. The cords of the third inclined belt ply 28 are inclined in the opposite direction to the inclination of the cords of the second inclined belt ply 20 with respect to the tire circumferential direction, such that an intercrossing belt layer is formed by the third inclined belt ply 28 and the second inclined belt ply 20. Steel cords, organic fiber cords, or the like may be employed as the cords of the third inclined belt ply 28.

A width W4 of the third inclined belt ply 28 is set wider than the width W3 of the second inclined belt ply 20. The third inclined belt ply 28 covers the entire second inclined belt ply 20. Note that the width W4 of the third inclined belt ply 28 is preferably set from 80% to 105% of the ground contact width TW of the tread portion 24. The width W4 of the third inclined belt ply 28 is set within a range of from 105% to 130% of the width W3 of the second inclined belt ply 20. (W4-W3)/2, namely, an actual dimension measured along the belt width direction from a tire width direction end of the second inclined belt ply 20 to a tire width direction end of the third inclined belt ply 28, is preferably 10 mm or greater.

Thus, in the pneumatic tire 10 of the present exemplary embodiment, relationships between the width W1 of the first inclined belt ply 16, the width W2 of the circumferential direction belt ply 18, the width W3 of the second inclined belt ply 20, and the width W4 of the third inclined belt ply 28 satisfy W4 > W1 > W2, and W4 > W3 > W2. In the present exemplary embodiment, the first inclined belt ply 16, the circumferential direction belt ply 18, the second inclined belt ply 20, and the third inclined belt ply 28 are each disposed in a shape with left-right symmetry with respect to a tire equatorial plane CL.

In the pneumatic tire 10 of the present exemplary embodiment, when G1 is rigidity with respect to out-of-plane bending in the tire circumferential direction per unit width of the first inclined belt ply 16, G2 is rigidity with respect to out-of-plane bending in the tire circumferential direction per unit width of the circumferential direction belt ply 18, G3 is rigidity with respect to out-of-plane bending in the tire circumferential direction per unit width of the second inclined belt ply 20, and G4 is rigidity with respect to out-of-plane bending in the tire circumferential direction per unit width of the third inclined belt ply 28, G2 is the largest, and the relationships G4 ≥ G3, and G4 ≥ G1 are satisfied. Note that G3 ≥ G1 is preferable.

### Operation and Advantageous Effects

First, explanation follows regarding a mechanism in which uneven wear occurs at shoulder sides of a tread portion. The tread portion of a pneumatic tire has curvature in the tire circumferential direction and in the tire width direction, and so the diameter of a tire width direction center portion of the tread portion is larger than the diameter at the shoulder sides of the tread portion. Thus, a circumferential length of the tire width direction center portion of the tread portion is longer than a circumferential length of the shoulder sides of the tread portion. Thus, when the pneumatic tire rolls over a road surface, shear force in the braking direction acts on the surface of the tread portion at the shoulder sides due to the difference in diameter. Moreover, shear force in the braking direction increases at locations where the nucleus of wear has occurred at an initial stage of the wear, such that the wear is liable to develop by self-induced wear.

The inventors have clarified through various test investigations that there is a worsening of uneven wear at the shoulder sides of the tread portion in pneumatic tires as the aspect ratio decreases. It is thought that this worsening of uneven wear occurs due to the following mechanism.

First, a radial direction length (tire cross-section height) of tire side portions becomes shorter due to the aspect ratio decreasing, and the rigidity of the tire side portions is relatively higher than the rigidity of the tread portion. Thus, deformation of the tire side portions decreases, and out-of-plane deformation of the belt in the tire circumferential direction increases instead, directly below the tire rotation axis.

When the shoulder sides of the tread portion contact the road surface, and out-of-plane bending deformation of the belt in the tire circumferential direction increases, a tire radial direction outer side portion of the belt is compressed in the circumferential direction, and compression distortion in the circumferential direction increases. The tire radial direction outer side portion of the belt that was compressed in the circumferential direction then elongates at a portion of the tread portion separating from the road surface, namely, at a kick-off side of the tread portion. Accompanying this, the tread portion at the tire radial direction outer side of the belt elongates in the tire circumferential direction and the ground contact face drags against the road surface, giving worse wear.

Explanation follows regarding operation of the pneumatic tire 10 of the present exemplary embodiment.

In the pneumatic tire 10 of the present exemplary embodiment, the belt 22 includes the circumferential direction belt ply 18 including cord set at an angle of 5° or less with respect to the tire circumferential direction, the second inclined belt ply 20 including cords set at an angle of from 30° to 60° with respect to the tire circumferential direction and inclined in the opposite direction to the inclination of the cords of the first inclined belt ply 16 with respect to the tire circumferential direction, and the third inclined belt ply 28 including cords set at an angle that exceeds 5° and is 30° or less with respect to the tire circumferential direction. Thus, the rigidity of the tread portion 24 with respect to out-of-plane bending in the tire circumferential direction is raised.

The cords of the second inclined belt ply 20 and the cords of the first inclined belt ply 16 are inclined in opposite directions to each other with respect to the tire circumferential direction, and these cords intercross each other. Thus, an intercrossing belt layer is formed by the second inclined belt ply 20 and the first inclined belt ply 16, enabling rigidity with respect to in-plane shearing to be secured. This enables the difference in diameter between the tire equatorial plane CL side and the shoulder sides to be reduced, and enables uneven wear performance to be improved. Moreover, improving the rigidity of the belt 22 with respect to in-plane shearing enables cornering power to be improved, thereby enabling steering stability to be improved.

In the pneumatic tire 10 of the present exemplary embodiment, the third inclined belt ply 28, which is inclined in the opposite direction to the inclination of the cords of the second inclined belt ply 20 with respect to the tire circumferential direction and is configured including plural cords set at an angle that exceeds 5° and is 30° or less with respect to the tire circumferential direction , is disposed at the tire radial direction outer side of the second inclined belt ply 20. This enables the rigidity of the belt 22 with respect to in-plane shearing to be further improved compared to cases in which the third inclined belt ply 28 is not provided.

Thus, the advantageous effect, in which the difference in diameter between the center side and the shoulder sides of the tread portion 24 is reduced, is further improved, enabling uneven wear at the shoulder sides of the tread portion 24 to be further suppressed. Since the rigidity of the belt 22 with respect to in-plane shearing is further improved, cornering power can be further improved, thereby enabling steering stability to be further improved.

The third inclined belt ply 28 at the tire radial direction outermost side has a width wider than those of the circumferential direction belt ply 18 and the second inclined belt ply 20, and the width W4 of the third inclined belt ply 28 is set from 80% to 105% of the ground contact width TW of the tread portion 24. This enables the advantageous effect, in which rigidity of the tread portion 24 with respect to out-of-plane bending in the tire circumferential direction is raised by the third inclined belt ply 28, to be extended as far as the vicinity of ground contact edges 24E of the tread portion 24 (the vicinity of shoulders 27).

This enables compression distortion in the circumferential direction of a tire radial direction outer side portion of the belt 22 to be suppressed and enables dragging of the kick-off side of the tread portion 24 against the road surface to be suppressed, thereby enabling suppression of uneven wear at the shoulder sides of the tread portion 24 accompanying a decrease in the aspect ratio of the pneumatic tire 10.

Note that the second inclined belt ply 20, which is at the tire radial direction outer side of the circumferential direction belt ply 18 and is set with lower rigidity with respect to out-of-plane bending in the tire circumferential direction than the circumferential direction belt ply 18, extends further toward the tire width direction outer side than both width direction end portions of the circumferential direction belt ply 18. Moreover, the third inclined belt ply 28, which is at the tire radial direction outer side of the second inclined belt ply 20 and is similarly set with lower rigidity with respect to out-of-plane bending in the tire circumferential direction than the circumferential direction belt ply 18, extends further toward the tire width direction outer side than both width direction end portions of the second inclined belt ply 20. Thus, rigidity gradually changes from tire width direction outer ends of the circumferential direction belt ply 18 toward the ground contact edges 24E, and a reduction in uneven wear performance accompanying a sudden change in rigidity is suppressed. Note that when the widths of the circumferential direction belt ply 18, the second inclined belt ply 20, and the third inclined belt ply 28 are too similar to each other, this results in a large step in the rigidity along the tire width direction, giving rise to a concern of a malfunction occurring, such as separation starting at width direction ends of the belt plies, and a concern of a reduction in durability at belt end portions.

The second inclined belt ply 20 and the third inclined belt ply 28 are disposed at the tire radial direction outer side of the circumferential direction belt ply 18, thereby enabling damage to the cords of the circumferential direction belt ply 18 due to input from the road surface, or due to foreign matter piercing through the tread portion 24, to be suppressed, enabling the durability of the circumferential direction belt ply 18 to be improved.

In the pneumatic tire 10 of the present exemplary embodiment, the first inclined belt ply 16, which has a width wider than that of the circumferential direction belt ply 18 and is configured including plural cords set at an angle of from 45° to 60° with respect to the tire circumferential direction, is disposed between the circumferential direction belt ply 18 and the carcass 14. This enables the ability of the tread portion 24 to envelop protruding objects to be improved, and enables plunger durability of the pneumatic tire 10 to be secured.

Note that, when the width W1 of the first inclined belt ply 16 is less than 70% of the ground contact width TW of the tread portion 24, plunger durability cannot be secured at the shoulder sides of the tread portion 24. Moreover, the intercrossing width of the first inclined belt ply 16 with the second inclined belt ply 20 is smaller, and rigidity with respect to in-plane shearing cannot be secured.

However, in the first inclined belt ply 16, when the width W1 exceeds 95% of the ground contact width TW of the tread portion 24 such that the end portions are close to the third inclined belt, belt durability is reduced.

When the angle of the cords of the first inclined belt ply 16 is less than 45° with respect to the tire circumferential direction, the rigidity of the first inclined belt ply 16 in the tire circumferential direction is raised, the ability to envelop protruding objects is reduced, and there is a concern that plunger durability cannot be secured.

However, when the angle of the cords of the first inclined belt ply 16 exceeds 60° with respect to the tire circumferential direction, the rigidity with respect to in-plane shearing falls, leading to a negative effect on uneven wear performance of the tread end portions, and a reduction in steering stability.

When the width W2 of the circumferential direction belt ply 18 is less than 50% of the ground contact width TW, internal pressure maintainability is reduced, there is an increase in internal pressure and increase in length when running, leading to an increase in groove cracks and a reduction in belt durability. When the width W2 of the circumferential direction belt ply 18 exceeds 85% of the ground contact width TW, the width direction end portions of the circumferential direction belt ply 18 are too close to the ground contact edges 24E of the tread portion 24, and there is a strong concern that the width direction end portions of the circumferential direction belt ply 18 and the width direction end portions of the second inclined belt ply 20 are aligned with each other, as well as a strong concern that the width direction end portions of the circumferential direction belt ply 18 and the width direction end portions of the third inclined belt ply 28 are aligned with each other, such that a step in rigidity in the width direction increases. Thus, separation starting at the width direction end portions of the circumferential direction belt ply 18, the width direction end portions of the second inclined belt ply 20, and the width direction end portions of the third inclined belt ply 28, as well as other malfunctions, are more liable to occur.

When the width W2 of the circumferential direction belt ply 18 is less than 60% of the width W1 of the first inclined belt ply 16, the width W2 of the circumferential direction belt ply 18 is too narrow, the internal pressure maintainability is reduced, there is an increase in internal pressure and increase in length when running, leading to an increase in groove cracks, and a reduction in belt durability.

However, when the width W2 of the circumferential direction belt ply 18 exceeds 95% of the width W1 of the first inclined belt ply 16, the ends of the circumferential direction belt ply 18 and the ends of the first inclined belt ply 16 are too close to each other, and there is a reduction in belt durability.

When the angle of the circumferential direction belt ply 18 exceeds 5° with respect to the tire circumferential direction, the internal pressure maintainability is reduced, there is an increase in internal pressure and increase in length when running, leading to an increase in groove cracks and a reduction in belt durability.

When the angle of the cords of the second inclined belt ply 20 is 30° or less with respect to the tire circumferential direction, the rigidity with respect to in-plane shearing falls, leading to a negative effect on uneven wear performance of the tread end portions and a reduction in steering stability.

When the width W3 of the second inclined belt ply 20 is less than 105% of the width W2 of the circumferential direction belt ply 18, the ends of the circumferential direction belt ply 18 and the ends of the first inclined belt ply 16 are too close to each other, such that there is a reduction in belt durability, the intercrossing width with the second inclined belt ply 20 is smaller, and rigidity with respect to in-plane shearing cannot be secured.

However, when the width W3 of the second inclined belt ply 20 exceeds 140% of the width W2 of the circumferential direction belt ply 18, the width W3 of the second inclined belt ply 20 is too wide, such that the end portions thereof are too close to the third inclined belt ply 28 and there is a reduction in belt durability as a result.

For the second inclined belt ply 20, when the width W3 is less than 70% of the ground contact width TW of the tread portion 24, the intercrossing width with the second inclined belt ply 20 is smaller and rigidity with respect to in-plane shearing cannot be secured.

However, when the width W3 of the second inclined belt ply 20 exceeds 95% of the ground contact width TW of the tread portion 24, the width W3 of the second inclined belt ply 20 is too wide, such that the end portions thereof are too close to the third inclined belt ply 28 and there is a reduction in belt durability as a result.

When the angle of the cords of the second inclined belt ply 20 is less than 30° with respect to the tire circumferential direction, the rigidity with respect to in-plane shearing falls, leading to a negative effect on uneven wear performance of the tread end portions and a reduction in steering stability.

However, when the angle of the cords of the second inclined belt ply 20 exceeds 60° with respect to the tire circumferential direction, there is insufficient rigidity of the second inclined belt ply 20 with respect to out-of-plane bending in the tire circumferential direction.

When the width W4 of the third inclined belt ply 28 is less than 105% of the width W3 of the second inclined belt ply 20, the width W4 of the third inclined belt ply 28 is too narrow, such that the end portions thereof are too close to the third inclined belt ply 28 and there is a reduction in belt durability as a result. Moreover, rigidity with respect to out-of-plane bending cannot be made to gradually fall as far as the tread end portions and there is a negative effect on uneven wear performance.

Note that in practice, an upper limit of the width W4 of the third inclined belt ply 28 is 130% of the width W3 of the second inclined belt ply 20.

When the width W4 of the third inclined belt ply 28 is less than 80% of the ground contact width TW, the advantageous effect, in which rigidity with respect to out-of-plane bending in the tire circumferential direction is raised by the third inclined belt ply 28, cannot be extended as far as the vicinity of the ground contact edges 24E of the tread portion 24.

Note that in practice, an upper limit of the width W4 of the third inclined belt ply 28 is 105% of the ground contact width TW.

When the angle of the cords of the third inclined belt ply 28 is 5° or less with respect to the tire circumferential direction, rigidity with respect to out-of-plane bending in the circumferential direction cannot be made to gradually fall toward the tread end portions and a difference in bending rigidity arises. Uneven wear of the tread end portions increases as a result.

However, when the angle of the cords of the third inclined belt ply 28 exceeds 30° with respect to the tire circumferential direction, there is insufficient rigidity of the third inclined belt ply 28 with respect to out-of-plane bending in the tire circumferential direction, and the advantageous effect of improving rigidity with respect to out-of-plane bending in the tire circumferential direction in the vicinity of the ground contact edges 24E by using the second inclined belt ply 20, cannot be attained.

### Other Exemplary Embodiments

An exemplary embodiment of the present invention has been explained above.

The pitch of the cords of the circumferential direction belt ply 18 may be constant along the tire width direction, or may be changed along the tire width direction. For example, a configuration may be applied in which the pitch at both width direction sides of the cords of the circumferential direction belt ply 18 is set narrower than the pitch at the width direction center side thereof, so as to raise rigidity with respect to out-of-plane bending in the tire circumferential direction at both width direction sides. This enables rigidity with respect to out-of-plane bending in the tire circumferential direction at the shoulder sides of the belt 22 to be raised and also enables the advantageous effect of suppressing uneven wear at the shoulder sides to be improved.

### Test Example

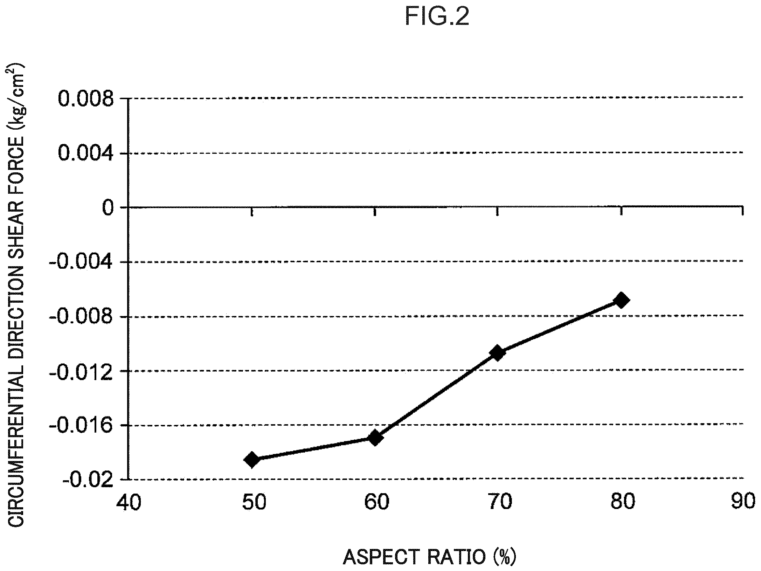

The graph in Fig. 2 illustrates a relationship between aspect ratio and circumferential direction shear force in the vicinity of shoulders of a tread portion. It is apparent that the lower the aspect ratio, the larger the circumferential direction shear force in the braking direction (the direction in which rotation slows).

Test Method: Measured employing a tire tread face ground contact portion measuring device described in JP-ANo. H07-63658.

When the circumferential direction shear force increases in the braking direction, drag of the tread portion against the road surface increases and there is worse uneven wear. Thus, it is apparent from the graph showing the test results that the lower the aspect ratio of the pneumatic tire, for example, as the aspect ratio decreases below 65%, the greater the advantageous effect that can be obtained by suppressing uneven wear at the shoulder sides of the tread portion.

## Claims

1. A pneumatic tire (10) comprising:
a carcass (14) that spans from one bead portion (12) to another bead portion (12);
a tread portion (24) that is disposed at a tire radial direction outer side of the carcass (14) and that contacts a road surface; and
a belt (22) that includes
a first inclined belt ply (16) that is disposed at the tire radial direction outer side of the carcass (14) and that includes a plurality of cords set at an angle of from 45° to 60° with respect to a tire circumferential direction,
a circumferential direction belt ply (18) that is disposed at the tire radial direction outer side of the first inclined belt ply (16), that includes a cord wound in a spiral shape and set at an angle of 5° or less with respect to the tire circumferential direction, and that is formed with a narrower width than the first inclined belt ply (16),
a second inclined belt ply (20) that is disposed at the tire radial direction outer side of the circumferential direction belt ply (18), that is inclined in an opposite direction to an inclination of the cords of the first inclined belt ply (16) with respect to the tire circumferential direction, that includes a plurality of cords set at an angle of from 30° to 60° with respect to the tire circumferential direction, and that is set with a width wider than that of the circumferential direction belt ply (18),
a third inclined belt ply (28) that is disposed at the tire radial direction outer side of the second inclined belt ply (20), that includes a plurality of cords set at an angle that exceeds 5° and is 30° or less with respect to the tire circumferential direction, that is set with a width wider than those of the first inclined belt ply (16) and the second inclined belt ply (20), and that is provided across 80% or more of a ground contact width (TW) of the tread portion (24), the width of the third inclined belt ply (28) being set within a range of from 105% to 130% of the width of the second inclined belt ply (20).

2. The pneumatic tire (10) of claim 1, wherein the cord of the circumferential direction belt ply (18) is an extendable cord that has elongation properties of from 4.5% to 5.5% elongation at break.

3. The pneumatic tire (10) of claim 1 or claim 2, wherein an aspect ratio is 65% or lower.

## Patentansprüche

1. Luftreifen (10), umfassend:
eine Karkasse (14), welche sich von einem Wulstabschnitt (12) zu einem anderen Wulstabschnitt (12) erstreckt;
einen Laufflächenabschnitt (24), welcher auf einer Außenseite in der Reifenradialrichtung der Karkasse (14) angeordnet ist und eine Straßenoberfläche kontaktiert; und
einen Gürtel (22), welcher umfasst:
eine erste geneigte Gürtellage (16), welche auf der Außenseite in der Reifenradialrichtung der Karkasse (14) angeordnet ist und eine Mehrzahl von Kords umfasst, welche in einem Winkel von 45° bis 60° relativ zu einer Reifenumfangsrichtung festgelegt sind,
eine Umfangsrichtungsgürtellage (18), welche auf der Außenseite in der Reifenradialrichtung der ersten geneigten Gürtellage (16) angeordnet ist, welche einen Kord umfasst, welcher spiralförmig gewickelt ist und in einem Winkel von 5° oder weniger relativ zur Reifenumfangsrichtung festgelegt ist, und welcher mit einer Breite ausgebildet ist, welche schmaler ist als die erste geneigte Gürtellage (16),
eine zweite geneigte Gürtellage (20), welche auf der Außenseite in der Reifenradialrichtung der Umfangsrichtungsgürtellage (18) angeordnet ist, welche in einer Richtung geneigt ist, welcher der Neigung der Kords der ersten geneigten Gürtellage (16) relativ zur Reifenumfangsrichtung geneigt ist, welche eine Mehrzahl von Kords umfasst, welche in einem Winkel von 30° bis 60° relativ zur Reifenumfangsrichtung festgelegt sind, und welche mit einer Breite festgelegt ist, welche breiter als die der Umfangsrichtungsgürtellage (18) ist,
eine dritte geneigte Gürtellage (28), welche auf der Außenseite in der Reifenradialrichtung der zweiten geneigten Gürtellage (20) angeordnet ist, welche eine Mehrzahl von Kords umfasst, welche in einem Winkel größer als 5° und kleiner als oder gleich 30° relativ zur Reifenumfangsrichtung festgelegt sind, welche mit einer Breite festgelegt ist, welche breiter als die der ersten geneigten Gürtellage (16) und der zweiten geneigten Gürtellage (20) ist, und welche über 80% oder mehr einer Bodenkontaktbreite (TW) des Laufflächenabschnitts (24) bereitgestellt ist, wobei die Breite der dritten geneigten Gürtellage (28) innerhalb eines Bereichs von 105% bis 130% der Breite der zweiten geneigten Gürtellage (20) festgelegt ist.

2. Luftreifen (10) nach Anspruch 1, wobei der Kord der Umfangsrichtungsgürtellage (18) ein dehnbarer Kord ist, welcher Dehnungseigenschaften von 4,5% bis 5,5% Bruchdehnung aufweist.

3. Luftreifen (10) nach Anspruch 1 oder 2, wobei ein Aspektverhältnis kleiner als oder gleich 65% ist.

## Revendications

1. Bandage pneumatique (10), comprenant :
une carcasse (14) s'étendant d'une partie de talon (12) vers une autre partie de talon (12) ;
une partie de bande de roulement (24) disposée au niveau d'un côté externe, dans la direction radiale du bandage pneumatique, de la carcasse (14) et contactant la surface d'une route ; et
une ceinture (22) incluant :
une première nappe de ceinture inclinée (16) disposée au niveau du côté externe, dans la direction radiale du bandage pneumatique, de la carcasse (14) et incluant plusieurs câbles formant un angle compris entre 45° et 60° par rapport la direction circonférentielle du bandage pneumatique ;
une nappe de ceinture à direction circonférentielle (18) disposée au niveau du côté externe, dans la direction radiale du bandage pneumatique, de la première nappe de ceinture inclinée (16), incluant un câble enroulé en spirale et formant un angle de 5° ou moins par rapport à la direction circonférentielle du bandage pneumatique, et ayant une largeur plus étroite que la première nappe de ceinture inclinée (16) ;
une deuxième nappe de ceinture inclinée (20) disposée au niveau du côté externe, dans la direction radiale du bandage pneumatique, de la nappe de ceinture à direction circonférentielle (18), inclinée dans une direction opposée à une inclinaison des câbles de la première nappe de ceinture inclinée (16) par rapport à la direction circonférentielle du bandage pneumatique, incluant plusieurs câbles agencés selon un angle compris entre 30° et 60° par rapport à la direction circonférentielle du bandage pneumatique, et ayant une largeur supérieure à celle de la nappe de ceinture à direction circonférentielle (18) ;
une troisième nappe de ceinture inclinée (28) disposée au niveau du côté externe, dans la direction radiale du bandage pneumatique, de la deuxième nappe de ceinture inclinée (20), incluant plusieurs câbles agencés selon un angle supérieur à 5° et correspondant à 30° ou moins par rapport à la direction circonférentielle du bandage pneumatique, ayant une largeur supérieure à celles de la première nappe de ceinture inclinée (16) et de la deuxième nappe de ceinture inclinée (20), et agencée à travers 80% ou plus d'une largeur de contact au sol (TW) de la partie de bande de roulement (24), la largeur de la troisième nappe de ceinture inclinée (28) étant comprise dans un intervalle représentant 105% à 130% de la largeur de la deuxième nappe de ceinture inclinée (20).

2. Bandage pneumatique (10) selon la revendication 1, dans lequel le câble de la nappe de ceinture à direction circonférentielle (18) est un câble extensible présentant des propriétés d'allongement représentant de 4,5% et 5,5% de l'allongement à la rupture.

3. Bandage pneumatique (10) selon les revendications 1 ou 2, dans lequel un rapport d'aspect correspond à 65% ou moins.
